# EUROPÄISCHE PATENTSCHRIFT

(11) **EP 1 077 863 B1**
(45) Veröffentlichungstag und Bekanntmachung des Hinweises auf die Patenterteilung: **11.06.2008**
(21) Anmeldenummer: 99924750.5
(22) Anmeldetag: 01.04.1999
(51) Int. Cl.: B62D 1/19, B60R 21/20

(54) **SICHERHEITSLENKSÄULE, SICHERHEITSSYSTEM FÜR EIN FAHRZEUG UND FAHRZEUG MIT EINEM SICHERHEITSSYSTEM SOWIE SICHERHEITSVERFAHREN**
SAFETY STEERING COLUMN, SAFETY SYSTEM FOR A VEHICLE, VEHICLE EQUIPPED WITH A SAFETY SYSTEM AND SAFETY METHOD
COLONNE DE DIRECTION DE SECURITE, SYSTEME DE SECURITE POUR UN VEHICULE, VEHICULE EQUIPE D'UN SYSTEME DE SECURITE ET PROCEDE DE SECURITE

(30) Priorität: 11.05.1998 DE 29808317 U; 09.01.1999 DE 29900289 U; 03.02.1999 DE 29901657 U
(43) Veröffentlichungstag der Anmeldung: 28.02.2001
(60) Teilanmeldung: 03017863.6
(73) Patentinhaber: ThyssenKrupp Presta AG, 9492 Eschen (LI)
(72) Erfinder: MÜLLER, Olaf, D-65428 Rüsselsheim (DE)
(74) Vertreter: Lindner, Manfred Klaus
(86) Internationale Anmeldenummer: PCT/DE1999/001000
(87) Internationale Veröffentlichungsnummer: WO 1999/058389

(56) Entgegenhaltungen:
- WO-A-96/16841
- DE-A- 3 805 869
- DE-A- 19 829 239
- DE-A- 19 844 412
- DE-U- 29 514 314

## Beschreibung

Die Erfindung betrifft eine Sicherheitslenksäule nach dem Oberbegriff des Anspruchs 1. Weiterhin betrifft die Erfindung ein Sicherheitssystem sowie ein Fahrzeug mit einer solchen Sicherheitslenksäule oder einem solchen Sicherheitssystem und ein Sicherheitsverfahren.

Es sind aus der Praxis Sicherheitslenksäulen bekannt, die im Fall eines Frontaufpralls des damit ausgerüsteten Fahrzeuges eine Bewegung des Lenkrades vom Fahrer weg bereitstellen. Dabei handelt es sich um rein mechanische Systeme, die nur die Bewegungsenergie des Fahrzeuges zur Lenksäulenverstellung nutzen. In Abhängigkeit von der konkreten Unfallsituation ist dabei nicht zuverlässig eine gewünschte Funktion und ein Schutz des Fahrzeuführers gewährleistet.

Die DE 38 05 869 A1 offenbart für Fahrzeuge eine Sicherheitseinrichtung, die aus einer geteilten, ineinander verschiebbaren Lenksäule besteht. Im normalen Gebrauchsfall sind die beiden Lenksäulenabschnitte auf Drehmoment, Zug und Druck gegeneinander verriegelt. In einer Ausführung mit einem pyrotechnischen Linearzylinder befindet sich die Verriegelungsmechanik für die Zug- und Druckkräfte im Linearzylinder. Eine Entriegelung erfolgt automatisch im Aktivierungsfall (Unfall mit über 10g Aufprallstoß) bei der Zündung einer Treibladung über einen Crashsensor. Der sich dann aufbauende Druck wird dazu genutzt, vor Hubbeginn Klemmelemente zu entriegeln. Statt des Linearzylinders kann auch eine starke Zugfeder zum Einsatz kommen, die mit einer beschleunigungssensitiv entriegelbaren Kupplung zwischen den beiden Lenksäulenabschnitten zusammenwirkt. Beide Ausführungsarten sind geeignet, mit einem Airbag im Lenkrad kombiniert zu werden, dessen Aufblasvolumen in diesem Fall - ebenfalls kostensenkend - kleiner gehalten werden kann.

Aus der WO 96/16841 ist eine Airbag-Sicherheitsvorrichtung bekannt, die in einem Lenkrad an einer teleskopischen Welle montiert ist, die von einer Lenksäule getragen wird, die teleskopische Sektionen hat, wobei eine bewegliche Wand, auf die der Aufblasdruck des Bags ausgeübt wird, zwischen dem Lenkrad und einem Fahrzeuginsaßen positioniert ist. Eine weitere Wand des Bags hat Steuereinrichtungen zum Freigeben der teleskopischen Sektionen der Lenksäule, und die äußerste Sektion und die Lenkwelle, die das Lenkrad tragen, bilden miteinander einen Zusammenbau, der in der Vorwärtsrichtung des Fahrzeuges relativ zu der anderen stationären Sektion durch die Rückstoßkraft axial beweglich ist, die erzeugt wird, wenn der Airbag aufgeblasen wird.

Eine Lenkvorrichtung für ein Fahrzeug ist in der DE 198 29 239 A1 offenbart. Diese Lenkvorrichtung soll die Sicherheit eines Fahrzeuginsassen bei einem Fahrzeugcrash dadurch erhöhen, dass im Crashfall die Lenksäule und/oder das Lenkrad aus dem potentiellen Kopfaufschlagbereich des Fahrzeuginsassen entfernt wird. Dazu wird eine Lenkvorrichtung für ein Fahrzeug mit einer im Crashfall in Fahrzeugfrontrichtung verschiebbaren Lenksäule und/oder einem im Crashfall in Fahrzeugfrontrichtung verschiebbaren Lenkrad mit einer Verschiebevorrichtung versehen, die eine Arretiereinrichtung umfasst, mit der das Lenkrad und/oder die Lenksäule im Fahrzeugbetrieb in einer bestimmten Verstellposition festgelegt sind/ist. Die Arretiereinrichtung weist Entriegelungsmittel auf, die im Crashfall aktivierbar sind und die Arretierung lösen. Die Verschiebung der Lenksäule und/oder des Lenkrades in Fahrzeugfrontrichtung kann beispielsweise durch die Massenträgheitskräfte oder durch den Rückstoß eines in der Lenkvorrichtung untergebrachten Airbags erfolgen. Alternativ kann die Verschiebevorrichtung angetriebene Verschiebemittel umfassen, die im Crashfall aktiviert werden und die Lenksäule und/oder das Lenkrad in Fahrzeugfrontrichtung verschieben und damit aus dem potentiellen Kopfaufschlagbereich des Fahrzeuginsassen entfernen.

Die DE 44 21 509 A1 offenbart zum Zurückziehen einer Lenksäule eine Vorrichtung, die in einem Verstellerfeld zur Höhen- und Längsverstellung des Lenkrades angeordnet ist, wobei mit dem im Verstellerfeld verstellbaren Lenksäulenteil zur Übertragung beidseits wirkender Antriebskräfte in Rückzugsrichtung zwei Kolben einer pyrotechnischen Antriebseinrichtung verbunden sind, welche nach Zündung der Antriebseinrichtung den verstellbaren Lenksäulenteil aus der untersten vorderen Stellung im Verstellerfeld in eine blockierte Endstellung zurückziehen.

Aus der gattungsbildenden DE 295 14 314 U1 ist eine Sicherheitslenksäule bekannt, die in ihrer Axialrichtung mittels einer Komfortverstellung verstellbar ist, wobei pyrotechnisch betriebene Lenksäulen-Rückzugseinrichtungen vorgesehen sind, mittels denen eine Verstellung der Sicherheitslenksäule in ihrer Axialrichtung bei einem Crash vom Insassen weg betreibbar ist, und wobei die Lenksäulen-Rückzugseinrichtungen einen pyrotechnischen Verstellzylinder enthalten, der an einer Führung derart beweglich gelagert ist, dass er in einer Ausgangsstellung mit der Komfortverstellung bewegt wird.

Die Erfindung hat das Ziel einer weiteren Erhöhung der Sicherheit für Kraftfahrzeuginsassen. Dabei soll insbesondere eine Sicherheitslenksäule gegenüber dem Stand der Technik zuverlässiger, einfacher, platz und kostensparender ausgestaltet werden.

Dieses Ziel wird mit einer Sicherheitslenksäule nach dem Anspruch 1, einer Sicherheitssystem nach dem Anspruch 18, einem Fahrzeug nach dem Anspruch 25 und einem Sicherheitsverfahren nach dem Anspruch 26 oder 29 erreicht.

Erfindungsgemäß enthält die Sicherheitslenksäule pyrotechnisch betriebene Lenksäulen-Rückzugseinrichtungen, die in Abhängigkeit von einer Unfallbedingung auslösbar sind. Dabei sind die Lenksäulen-Rückzugseinrichtungen ferner derart ausgelegt, dass sie bei ihrer Auslösung zunächst eine Lenksäulenaxialverstellung freigeben, was durch pyrotechnische Betriebsmittel erfolgt, und dann das Rückziehen der Lenksäule längs deren Axialverstellweg bewirken. Dadurch kann das Lenkrad zuverlässig vom Fahrer weg bewegt werden, wodurch dessen Verletzungsrisiko durch einen Aufprall auf das Lenkrad stark verringert wird.

Mit Vorzug sind die Lenksäulen-Rückzugseinrichtungen antriebsmäßig mit Betriebseinrichtungen für einen Airbag und insbesondere einem mehrstufig auslösbaren Airbag gekoppelt, so dass dieselben pyrotechnischen Betriebsmittel, die zum Aufblasen des Airbags vorhanden sind, zumindest auch teilweise zum Antrieb der Lenksäulen-Rückzugseinrichtungen und insbesondere zum Rückziehen der Lenksäule längs deren Axialverstellweg eingesetzt werden.

Ferner ist es bei der vorstehenden Weiterbildung der Erfindung bevorzugt, wenn das Aufblasen und Entfalten des Airbags, und insbesondere das mehrstufige Aufblasen und Entfalten des Airbags in Abhängigkeit vom Rückzugsweg und/oder der Rückzugsposition der Lenksäule abhängig steuerbar ist. Dies kann beispielsweise durch eine mechanische Steuerung erfolgen, die Folgeauslösungen der pyrotechnischen Betriebseinrichtungen für die Lenksäulen-Rückzugseinrichtungen und/oder den Airbag mechanisch in Abhängigkeit vom Rückzugsweg und/oder der Rückzugsposition der Lenksäule und/oder vom Aufblas-/Entfaltungszustand des Airbags bewirkt.

Durch eine derartige Sicherheitslenksäule wird die Sicherheit für einen Fahrer eines Fahrzeuges weiter optimiert.

Ein erfindungsgemäßes Sicherheitssystem sowie ein Fahrzeug gemäß der Erfindung zeichnen sich durch eine erfindungsgemäße Sicherheitslenksäule mit pyrotechnisch betriebene Lenksäulen-Rückzugseinrichtungen aus, die in Abhängigkeit von einer Unfallbedingung auslösbar sind.

Vorzugsweise enthält ein solches Sicherheitssystem oder Fahrzeug Einrichtungen zur Erfassung der Sitzposition des Fahrers und Einrichtungen, die den Betrieb der Lenksäulen-Rückzugseinrichtungen in Abhängigkeit von der Sitzposition des Fahrers steuern. Aus oder statt der oder zusätzlich zur Sitzposition können auch Größe, Gewicht und/oder Konstitution des Fahrers zur Steuerung des Betriebs der Lenksäulen-Rückzugseinrichtungen erfasst und berücksichtigt werden.

Bei einem erfindungsgemäßen Sicherheitsverfahren werden bei einer erfindungsgemäßen Sicherheitslenksäule Lenksäulen-Rückzugseinrichtungen in Abhängigkeit von einer Unfallsituation pyrotechnisch so betrieben, dass das Lenkrad vom Fahrer weg bewegt wird.

Eine verfahrensmäßige Weiterbildung besteht darin, dass die Sitzposition des Fahrers und/oder dessen Größe, Gewicht und/oder Konstitution erfasst und einer Steuerung zugeführt werden, mittels der in Abhängigkeit von diesen Größen der Betrieb der Lenksäulen-Rückzugseinrichtungen gesteuert wird.

Weitere vorteilhafte und bevorzugte Ausgestaltungen der Erfindung sind in den abhängigen Ansprüchen angegeben und aus der übrigen Beschreibung sowie der Zeichnung zu entnehmen.

Ausführungsbeispiele zur näheren Erläuterung der Erfindung sind in der zugehörigen Zeichnung gezeigt und behandelt, in der
Fig. 1A und 1B ein erstes Ausführungsbeispiel einer Sicherheitslenksäule mit Lenksäulen-Rückzugseinrichtungen und einem Fahrerairbag in einer Längs- bzw. einer Querschnittsdarstellung zeigen,
Fig. 2 ein zweites Ausführungsbeispiel einer Sicherheitslenksäule mit Lenksäulen-Rückzugseinrichtungen und einem Fahrerairbag in einer Querschnittsdarstellung in zwei Alternativen zeigt, und
Fig. 3A, 3B und 3C Teile eines dritten Ausführungsbeispiels einer Sicherheitslenksäule mit Lenksäulen-Rückzugseinrichtungen in Schnittdarstellungen zeigen.

In den einzelnen Figuren der Zeichnung sind gleiche oder ähnliche oder gleich oder ähnlich wirkende Teile mit denselben Bezugszeichen versehen oder vergleichbar dargestellt, so dass sich Teile sowie deren Kombinationen, Funktionen und Wirkungsweisen für einen Fachmann auch aus der Betrachtung der Figuren der Zeichnung alleine, deren Vergleich und/oder den nachfolgend beschriebenen Angaben ggf. alleine ohne weiteres erschließen, auch wenn keine Bezugnahmen zwischen einzelnen Figuren und/oder zwischen Figuren und Text explizit angegeben oder dargestellt sind.

Anhand der Figuren wird nachfolgend die Erfindung detailliert erläutert, wobei noch auf einige besonders vorteilhafte Gestaltungen und Effekte der entsprechenden Ausführungen eingegangen wird.

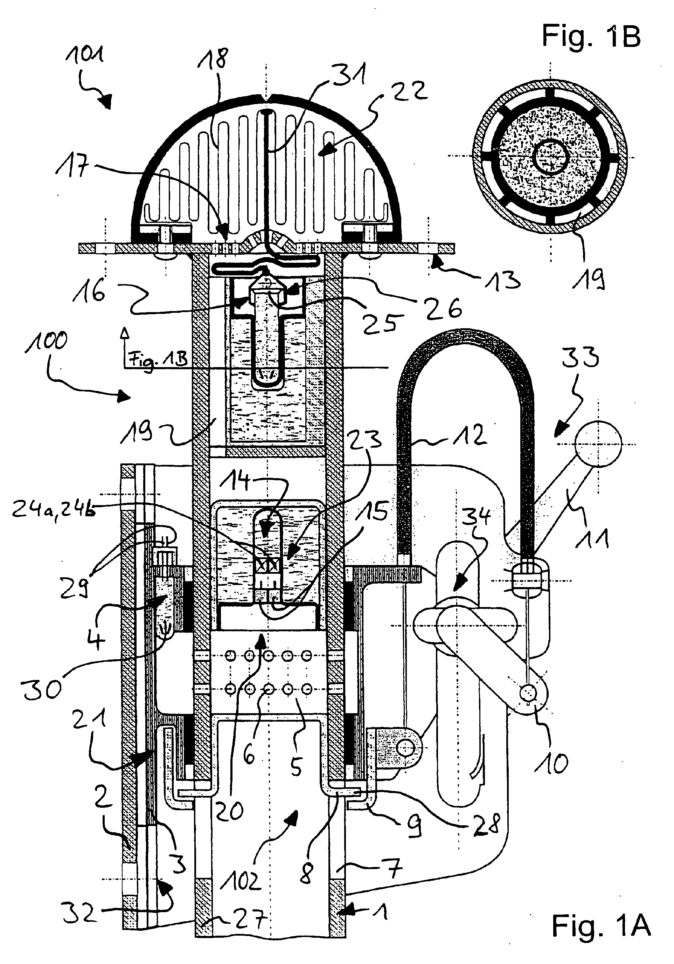

Ein erstes Ausführungsbeispiel einer Sicherheitslenksäule oder allgemein Sicherheitslenkung 100 mit Sicherheitseinrichtungen oder einem Sicherheitssystem 101 in Form von Lenksäulen-Rückzugseinrichtungen 102 und einem Fahrerairbag 22, der zweistufig ist, ist in den Fig. 1A und 1B gezeigt. Die Lenksäulen-Rückzugseinrichtungen 102 der Sicherheitseinrichtungen 101 enthalten eine Sekundärdruckzündung 20 und eine Rückfahrmechanik 21 der in der Fig. 1 teilweise dargestellten Lenksäule 1.

Die Lenksäule 1 ist bei dem Ausführungsbeispiel gemäß den Fig. 1A und 1B über einen Verstellschlitten 3 an einer Montageplatte 2 axial verstellbar angeordnet. Der Verstellschlitten 3 enthält eine Primärzündung 4, die in Kommunikation mit einer Druckkammer 5 mit Druckdurchgangslöchern 6 ist. Eine Begrenzung der Druckkammer 5 weist eine Schaltmuffe 8 auf und ist axial verschiebbar, wobei die Schaltmuffe 8 durch Schlitze 7 (nur ein Schlitz 7 ist gekennzeichnet) in einem Rohr 27 der Lenksäule 1 nach außerhalb des Rohrs 27 ragt. Das freie Ende 28 der Schaltmuffe 8 liegt zur Mitnahme bei Bewegung längs des Schlitzes 7 an einer Stellmuffe 9 an, an der ein Ende eines Bowdenzuges 12 befestigt ist. Das andere Ende des Bowdenzuges 12 ist an einem Lösehebel 10 befestigt, der mit einem Stellhebel 11 zusammenwirkt.

Weiterhin enthalten die Lenksäulen-Rückzugseinrichtungen 102 des ersten Ausführungsbeispiels der Fig. 1A und 1B eine Zündung 14 einer ersten Stufe des Fahrerairbags 22 in Form einer Sekundärdruckzündung 20. Die Zündung 14 der ersten Stufe des Fahrerairbags 22 verfügt über zwei Zündkolben 15, die von der Druckkammer 5 aus erreichbar sind, wofür die Erklärung weiter unten angegeben wird. Der Fahrerairbag 22 dieses Ausführungsbeispiels enthält weiterhin eine zweite Stufe mit einer Schnurzündung 16. Dem eigentlichen Bag 18 des Fahrerairbags 22 ist ein Partikelfilter 17 vorgeschaltet. Von der ersten Stufe führt ein Gasdurchtritt 19 (siehe auch Fig. 1B) an der zweiten Stufe vorbei in den Bag 18. Der Vollständigkeit halber ist noch eine Anschraubung 13 der Lenkung gezeigt.

In der Fig. 1 ist eine Primärzündung 4 angegeben, die, wie die gezeigten Anschlussleitungen 29 verdeutlichen, elektrisch ausgelöst wird. Der durch die entsprechende Patrone oder Kartusche 30 erzeugte Druckstoß erfüllt insbesondere zwei Funktionen.

Einerseits wird durch diesen Druckstoß über die zwei Zündkolben 15 die Zündung der ersten Stufe (siehe Fig. 1A) mechanisch ausgelöst, die durch den Gasdurchtritt 19 (siehe auch Fig. 1B) außerhalb der mit der Schnurzündung 16 eingezeichneten zweiten Stufe den Airbag 18 teilweise aufblasen kann. Dadurch, dass die elektrisch auslösbare oder zündbare Patrone 30 ortsfest im Fahrzeug außerhalb der drehbaren Lenksäule 1 und des drehbaren Lenkrades (nicht gezeigt) angeordnet ist, wird in vorteilhafter Weise eine elektrische Verbindung zwischen dem drehbaren Lenkrad (nicht gezeigt) und einer fest im Fahrzeug (nicht gezeigt) installierten Airbag-Auslösesteuerung (nicht gezeigt) eingespart.

Eine Realisierungsmöglichkeit einer solchen früher erforderlichen elektrischen Verbindung ist eine sogenannte Wickelfeder z.B. aus Kunststoff, durch die die Anschlussleitungen zu einer elektrisch auslösbaren Patrone im drehbaren Lenkrad geführt sind und die sicherstellt, dass diese elektrische Patrone bei jeder Drehstellung des Lenkrades ausgelöst werden kann. Eine solche Wickelfeder hat aber einen relativ hohe Preis. Statt einer solchen teueren Wickelfeder kann nun einfach die vergleichsweise billige Kombination aus einer elektrischen im Fahrzeug ortsfesten Primärzündung und einer mit der Lenksäule und dem Lenkrad mitdrehbaren mechanisch ausgelösten ersten Zündstufe eingesetzt werden.

Der Vollständigkeit halber wird noch darauf hingewiesen, dass die Schnurzündung 16 nur dann ausgelöst wird, wenn sich der Airbag 18 ungehindert über einen vorgegebenen Punkt ausdehnen kann und dadurch so weit an der Schnur 31 zieht, dass dadurch ein Reißzünder oder eine zur Erhöhung der Auslösesicherheit bei dem hier behandelten ersten Ausführungsbeispiel vorgesehene Doppelreißzündung 26 betätigt wird, wobei auch andere Zündarten, wie z.B. Aufschlagzünder verwendet und mittels geeigneter Einrichtungen ausgelöst werden können.

Andererseits bewirkt die Primärzündung 4, dass die sich mit der Lenksäule bei Lenkbewegungen mitdrehende Schaltmuffe 8 im gezeigten Beispiel vom Lenkrad (nicht gezeigt) weg verstellt wird. Wenn die Primärzündung 4 für eine solche Betätigung zu klein ausgelegt ist, etwa aus Kostengründen, kann auch der Druck der ersten Zündstufe der Airbagvorrichtung 22 zum entsprechenden Verstellen der Schaltmuffe 8 verwendet werden, was besonders bevorzugt ist. Auch eine Kombination beider Drücke kann als weitere Alternative genutzt werden.

Die Schaltmuffe 8 ist an die bezüglich der Drehung der Lenksäule 1 stehende Stellmuffe 9 im Lenksäulenbock 32 gekoppelt. Dadurch wird auf einfache und geschickte Weise der Druckstoß der Primärzündung 4 innerhalb der drehbaren Lenksäule 1 zum Druckauslösen der Zündung 14 der ersten Stufe zum Füllen des Airbags 18 gleichzeitig für eine nach außerhalb der drehbaren Lenksäule 1 auf ein gegenüber Drehbewegungen der letzteren ruhendes System übertragen.

An die Stellmuffe 9 im Lenksäulenbock 32 ist der Bowdenzug 12 angeschlossen, durch den die Verstellbewegung dieser Stellmuffe 9 auf die Lenksäulenarretierung oder Lenksäulenkomfortfeststellung 33 übertragen wird, die dazu dient, die Lenksäule 1 in Längsrichtung axial und in Höhenrichtung in individuellen Einstellpositionen festzustellen. Die Verstellbewegung der Stellmuffe 9 im Lenksäulenbock 32 führt mittels des Bowdenzuges 12 somit zum Lösen der Lenksäulenarretierung 33, die beispielsweise durch eine mittels des Stellhebels 11 betätigbare Verschraubung 34 gelöst ist. Dazu greift der Bowdenzug 12 über den Lösehebel 10 an der Arretierverschraubung 34 an.

Somit wird mittels der Primärzündung 4 durch die mit der Lenksäule 1 zusammen drehbare Schaltmuffe 8 die Stellmuffe 9 verschoben, die an dem Bowdenzug 12 zieht, der wiederum den Lösehebel 10 verdreht, was zum Freigeben der Arretierung 34 der in Längs- und Höhenrichtung einstellbaren Lenksäule 1 führt, so dass letztere zurückgezogen werden kann.

In besonders vorteilhafter Weise wird zum Zurückschieben der Lenksäule 1 und damit des Lenkrades (nicht gezeigt) vom Fahrer weg der stoßartige Druck beim Aufblasen des Airbags 18 verwendet. Durch das Zünden der ersten Stufe und jeder weiteren Stufe (lediglich beispielhaft ist in den Fig. 1A, 2 und 6 nur eine zweite Stufe gezeigt, worauf die Erfindung jedoch nicht beschränkt ist) wird der Airbag 18 schlagartig aufgeblasen und zum Fahrer hin entfaltet. Als Reaktion dieses als Aktion anzusehenden Aufblasens des Airbags 18 ergibt sich auch ein Druckstoß vom Fahrer weg, der auf die durch die wie vorstehend beschrieben infolge der Primärzündung 4 freigegebene Lenksäule 1 in der Weise wirkt, dass diese vom Fahrer weg geschoben wird. Damit wird die zum Aufblasen des Airbags 18 verwendete Energie in besonders geschickter Weise gleichzeitig dazu genutzt, das Lenkrad (nicht gezeigt) vom Fahrer weg zu bewegen. Insbesondere durch diese Kombination von mehreren Sicherheitsfunktionen (die Lenkung wird durch den Druck des Airbags verschoben) werden Bauraum, Gewicht und Kosten gespart.

Ein Dämpfungselement (nicht gezeigt) in der Lenksäule 1 kann verwendet werden, um beim Zurückschieben der Lenksäule 1 einen größeren Airbag 18 zu vermeiden. Das Element (nicht gezeigt) ist derart abgestimmt, dass eine stirnwandseitige Verkürzung der Lenksäule 1 durch Ineinanderschieben einer Lenksäulennabe (nicht gezeigt) erreicht wird. Der Airbag 18 schiebt gleichzeitig von der anderen Seite.

Zur Erläuterung der Ausgestaltung der Airbagvorrichtung 22 wird noch darauf hingewiesen, dass bei diesem ersten Ausführungsbeispiel von Sicherheitseinrichtungen 101 gemäß der Fig. 1A die Zündung 14 der ersten Stufe des Fahrerairbags 22 mittels der zwei bereits weiter oben beschriebenen Zündkolben 15 als Doppelkolbenzündung 23 ausgebildet ist, die durch einen Druckstoß der Primärzündung 4 auslösbar ist. Dazu enthält die Doppelkolbenzündung 23 zwei Zünder 24a, 24b. Die Schnurzündung 16 der zweiten Stufe dieses Fahrerairbags 22 weist einen Ringzünder 25 auf, an dem eine Doppelreißzündung 26 an zwei Seiten angreift.

Nachfolgend werden noch spezielle Ausgestaltungsmöglichkeiten der Erfindung beispielsweise im Rahmen des ersten Ausführungsbeispiels angegeben.

Allgemein schafft die Erfindung eine Sicherheitseinrichtung für ein Fahrzeug mit einem Lenkrad an einer Lenksäule, wobei die Sicherheitseinrichtung pyrotechnisch betriebene Lenksäulen-Rückzugseinrichtungen enthält.

Gemäß einer Weiterbildung kann vorgesehen sein, dass bei einer solchen Sicherheitseinrichtung die Lenksäulen-Rückzugseinrichtungen derart ausgelegt sind, dass sie bei ihrer Auslösung zunächst eine Lenksäulenaxialverstellung freigeben, was durch pyrotechnische Betriebsmittel erfolgt, und dann das Rückziehen der Lenksäule längs deren Axialverstellweg bewirken.

Alternativ oder zusätzlich kann die Lenksäulen-Rückzugseinrichtungen antriebsmäßig mit Betriebseinrichtungen für einen Airbag und insbesondere einem mehrstufig auslösbaren Airbag gekoppelt sein, so dass dieselben pyrotechnischen Betriebsmittel, die zum Aufblasen des Airbags vorhanden sind, zumindest auch teilweise zum Freigeben und/oder Antrieb der Lenksäulen-Rückzugseinrichtungen einsetzbar sind.

Dabei kann vorrichtungs- oder verfahrensmäßig insbesondere vorgesehen sein, dass das Aufblasen und Entfalten des Airbags, und insbesondere ggf. das mehrstufige Aufblasen und Entfalten des Airbags in Abhängigkeit vom Rückzugsweg und/oder der Rückzugsposition der Lenksäule abhängig steuerbar ist. Oder aber die Vorrichtung oder das entsprechende Verfahren kann dergestalt sein, dass eine mechanische Steuerung vorgesehen ist, die Folgeauslösungen der pyrotechnischen Betriebseinrichtungen für die Lenksäulen-Rückzugseinrichtungen und/oder den Airbag mechanisch in Abhängigkeit vom Rückzugsweg und/oder der Rückzugsposition der Lenksäule und/oder vom Aufblas-/Entfaltungszustand des Airbags bewirkt.

Ein Verfahren zum Auslösen und Betätigen von Sicherheitseinrichtungen im Rahmen der Erfindung kann dadurch gekennzeichnet sein, dass zunächst über eine Zündung einer ersten Treibladung und/oder einer ersten Stufe von Airbagvorrichtungen oder einer einstufigen Airbagvorrichtung wenigstens eine Arretierung der Lenksäule in deren Axialrichtung gelöst wird, und dass dann die Lenksäule ggf. zur Zündung wenigstens einer zweiten Treibladung in Richtung auf ihre maximal zurückgezogene Position vom Fahrer weg beaufschlagt wird.

Bevorzugt wird bei diesem Verfahren ggf. die zweite Treibladung durch die Wirkung der gezündeten ersten Treibladung gezündet.

Alternativ oder zusätzlich kann bei dem erfindungsgemäßen Verfahren ferner vorgesehen sein, dass durch die gezündete zweite Treibladung gleichzeitig mit oder zeitversetzt zu dem Lenksäulenrückzug ein Airbag aufgeblasen wird.

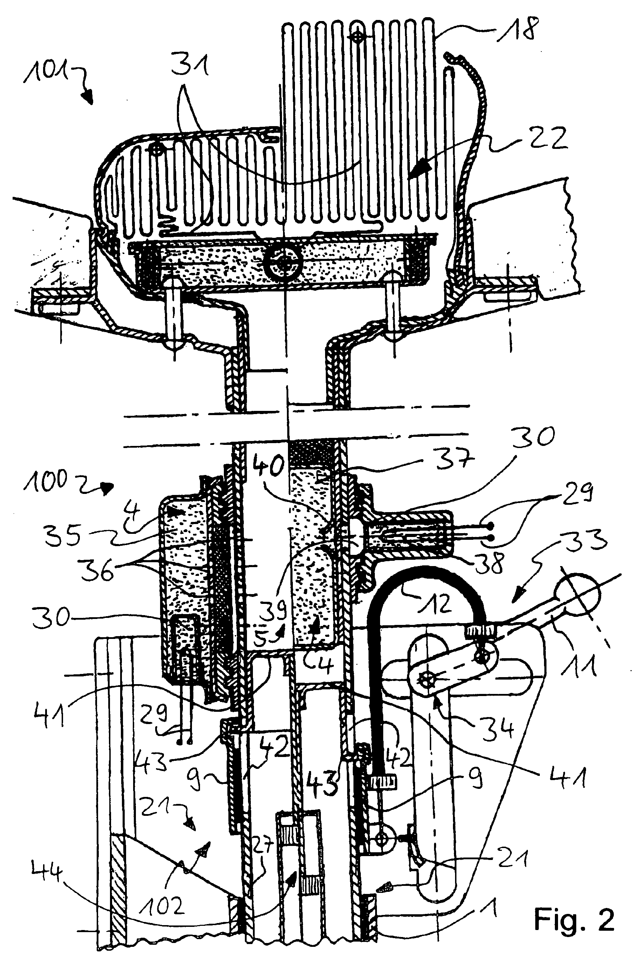

In der Fig. 2 ist ein zweites Ausführungsbeispiel einer Sicherheitslenksäule 100 gezeigt.

In der Abbildung der Fig. 2 sind die Sicherheitseinrichtungen 101 dieser Ausführung in der linken Hälfte vor einer Auslösung und in der rechten Hälfte nach einer Auslösung gezeigt.

Auch bei diesem Ausführungsbeispiel enthalten die Sicherheitseinrichtungen 101 eine zweistufige Airbagvorrichtung 22, deren zweite Stufe erst gezündet wird, wenn sich der Airbag 18 mittels der ersten Stufe so weit ausdehnen konnte, dass sichergestellt ist, dass sich nichts im Ausbreitungsbereich des Gassackes 18 befindet. Dies kann rein mechanisch über Kordeln oder Schnüre 31, die direkt an einem Zündmechanismus (nicht bezeichnet) ziehen oder durch Zug einen gespannten Zündmechanismus (nicht bezeichnet) freigeben können. Die Kordel(n) kann/können natürlich auch elektrische Schalter oder Hallsensoren o.ä. bedienen, wenn eine elektrische zweite Zündung benutzt wird. Die Zündung des zweiten Generators gibt damit vollen Druck nur dann auf den Gassack 18, wenn niemand zu dicht vor dem Airbag sitzt, bzw. erst, wenn die erste Stufe den Gassack 18 "in position" gesetzt hat.

Die Fig. 2 zeigt in der unteren Hälfte der Abbildung für die erste Stufe einen ringförmig die Lenksäule 1 umschließenden Generator 35. Die Lenksäule 1 kann sich drehen und der Generator 35 bleibt stehen. Dies hat den Vorteil, dass die elektrische Zündung statisch fest steht und damit keine kostspielige Wickelfeder zur Stromzuführung benötigt wird, wie bereits weiter oben erläutert wurde. Der Druckübergang geschieht durch Löcher 36 und wird z.B. mit Labyrinthdichtungen (nicht bezeichnet) abgedichtet.

Die Fig. 2 zeigt im rechten Teil der unteren Hälfte der Abbildung eine Alternative der Ausführung des ersten Generators 35, wie er vorstehend beschrieben und im linken Teil der unteren Hälfte der Abbildung der Fig. 2 gezeigt ist. Bei der Ausführung gemäß dem rechten Teil der Abbildung der Fig. 2 ist der Generator 37 in der Lenksäule 1 platziert. Lediglich die elektrische Patrone 30 mit einem Booster 38 ist wegen der festen Zuleitung statisch angebracht und bringt ihre Zündenergie mittels eines Ringkanals 39 über Löcher 40 in den dünnwandigen Generator 37.

Vor- und unterhalb des Generators 35 oder 37 ist ein Kolben 41 in der Lenksäule 1 angebracht, dessen in Schlitzen 42 geführte Nasen 43 eine Muffe 9 bei Druckbeaufschlagung bezüglich dem tatsächlichen Einbau in einem Fahrzeug (nicht gezeigt) nach vorn/unten bewegen. Diese Muffe 9 gibt ihre Bewegung weiter über einen Bowdenzug 12 an eine Links/Rechts-Gewindespindel oder allgemein Verschraubung 34 zur Öffnung der Längs- und Höhenverstellung der Lenksäule 1. Der Rückstoß des Airbags 18 schiebt die Lenkung 1 bezüglich dem tatsächlichen Einbau in einem Fahrzeug (nicht gezeigt) nach vom und unten. Um zu verhindern, dass dann ein größerer Gassack 18 benötigt wird, kann die Verstellgeschwindigkeit mit einem Dämpfer 44 abgebremst werden.

Aus der Darstellung der vorstehend beschriebenen Ausführungsbeispiele ergeben sich u.a. folgende Vorteile:

Bevor die zweite Stufe den Gassack auf den Enddruck aufbläst, wird simultan manuell und einfach mit der Länge von Kordeln überprüft, ob niemand zu dicht am Airbag sitzt.

Die Ausführung der Generatoren in zwei Alternativen als "stehend", d.h. nicht rotierend, spart eine kostenintensive Wickelfeder zum Ausgleich der Drehbewegung des Lenkrades.

Die pyrotechnische Verstellung der Lenksäule gibt mehr Raum zwischen Person und Lenkung.

Im ersten und zweiten Ausführungsbeispiel liegt die Idee zugrunde, mehr Abstand zwischen Fahrer und Lenkrad während des Crashs zu schaffen.

Die erfindungsgemäße Ausgestaltung sieht also eine verstellbare Lenksäule vor, die mittels pyrotechnisch angetriebenem Zylinder beim Crash vom Insassen weggezogen wird.

Gemäß einer bevorzugten Weiterbildung kann eine solche Lenksäule derart mit einem pyrotechnisch angetriebenem Zylinder versehen sein, dass dieser mittels über Nocken eingesteuerter Zahnstange angreifend an einem Zahnrad eine Verklemmachse der Komfortverstellung verdreht und damit die Verstellrastung öffnet.

Alternativ oder zusätzlich kann eine solche Lenksäule derart mit einem pyrotechnisch angetriebenem Zylinder versehen sein, dass dieser mittels Schwenkhebel die Verklemmachse der Komfortverstellung verdreht und damit die Verstellverrastung öffnet.

Um die Lenkungskomfortverstellung durch den erfindungsgemäß vorgesehenen pyrotechnischen Zylinder nicht zu beeinträchtigen, ist es ferner bevorzugt, die Anbindung des pyrotechnischem Zylinders derart zu gestalten, dass er im Normalzustand (d.h., außer bei einem Crash) in einer Schlitzführung bei Lenkungskomfortverstellung gleitet.

Ferner kann vorzugsweise vorgesehen sein, dass der pyrotechnische Verstellzylinder derart in die Verstellmechanik der Komfortverstellung eingreift, dass die als Zahnstange ausgeführte Kolbenstange in jeder Komfortstellung nach gleich kurzem Hub in ein Verstellzahnrad eingreift.

Weiterhin ist es bevorzugt, wenn der pyrotechnische Verstellzylinder derart in einer Führung beweglich gelagert ist, dass dieser in Ausgangsstellung mit der Komfortverstellung bewegt wird.

Der pyrotechnische Zylinder kann auch derart in seiner Schlitzführung gelagert sein, dass bei einer Zündung eine Verkeilung von zwei durch Abscherstifte verbundenen Keile verklemmt, derart, dass ein Keil durch Mitnahme des Zylinders gegen den anderen verkeilt wird und damit der Zylinder fixiert ist. Alternativ kann vorgesehen sein, dass der pyrotechnische Zylinder derart in seiner Schlitzführung gelagert ist, dass zwei keilförmige Mitnehmer sich gegeneinander verkeilen können. Ein Keil wird durch den Zylinder in einer Richtung bewegt, der andere mittels abreißbarem Mitnehmer in der Gegenrichtung mit der Kolbenstange des pyrotechnischen Zylinders bewegt.

Eine weitere bevorzugte Ausgestaltung der hier behandelten Ausführungsbeispiele besteht darin, dass der pyrotechnische Zylinder derart gestaltet ist, dass er außer der Öffnung der Verstellmechanik danach den Schlitten mit der Lenksäule vom Fahrer weg bewegt. Dies kann dadurch weitergebildet sein, dass der pyrotechnische Zylinder derart geführt ist, dass er in der Komfortschlittenführung über den Komfortweg hinaus bewegt wird. Zusätzlich kann der pyrotechnische Zylinder derart geführt sein, dass am Ende des Hubes das System verrastet. Es ist auch möglich, dass der pyrotechnische Zylinder derart mit einem in Gurtstraffern üblichen Klemmkolben versehen ist, dass der Kolben sich nur vorwärts bewegen kann und bei auftreten einer Last in Gegenrichtung klemmt. Letzteres kann dadurch fortgebildet werden, dass der Kolben derart gestaltet ist, dass statt klemmender Kugeln Lastaufnehmer (nicht gezeigt) eingesetzt werden.

Eine andere Ausgestaltung der hier behandelten Ausführungsbeispiele besteht darin, bei dem pyrotechnischen derart auf der der Kraftseite gegenüberliegender Seite eine Dämpfung (hydraulisch oder mit Luft) anzubringen, dass mit der Abströmung der Medien eine Geschwindigkeitsregulierung bewirkt wird.

Weiterhin kann der pyrotechnische Zylinder derart gezündet werden, dass eine Abstimmung mit der Zündung des Airbags erfolgt.

Weitere Ausgestaltungsmöglichkeiten und Vorteile ergeben sich aus den Kombinationen der vorstehend und nachfolgend angegebenen Merkmale und Merkmalskombinationen.

Eine Alternative stellt die Zündung in dem Fall dar, in dem eine Überwachungselektronik erkennt, dass z.B. eine kleine Person zu dicht vor dem Lenkrad sitzt.

Andere gleichwirkende Lösungen liegen im Rahmen des fachmännischen Wissens.

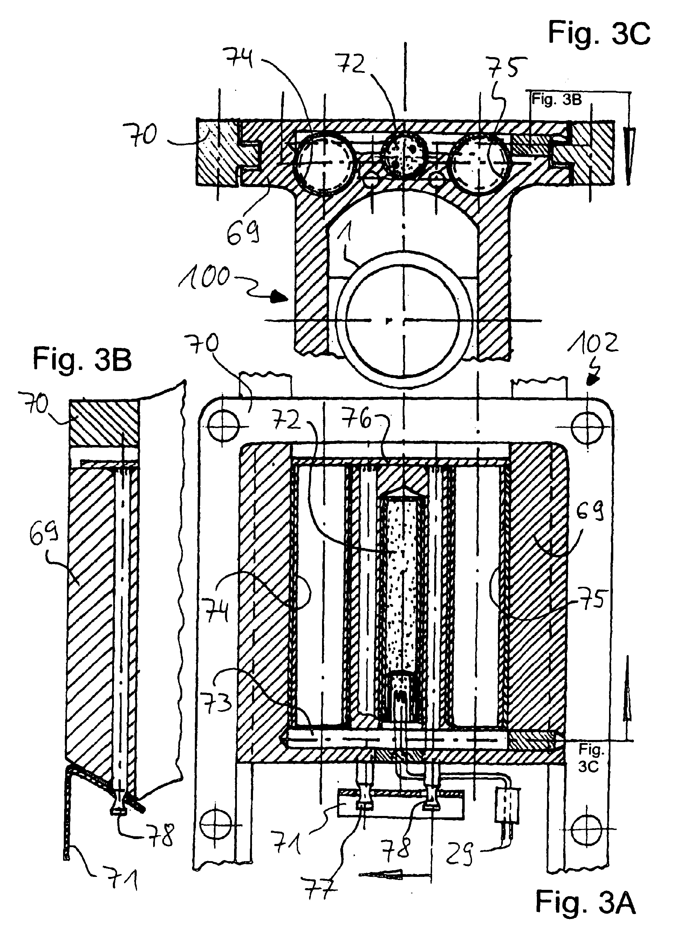

In den Fig. 3A, 3B und 3C ist ein drittes Ausführungsbeispiel einer Sicherheitseinrichtung für ein Fahrzeug mit einem Lenkrad an einer Lenksäule und insbesondere eine pyrotechnisch verstellbare Lenksäulenbefestigung anhand von Schnittdarstellungen von Teilansichten verdeutlicht. Damit wird eine weitere Erhöhung der Sicherheit für z.B. Kraftfahrzeuginsassen erreicht, indem die Sicherheitseinrichtungen pyrotechnisch betriebene Lenksäulen- Rückzugseinrichtungen enthalten. Dadurch kann das Lenkrad vom Fahrer weg bewegt werden, wodurch dessen Verletzungsrisiko durch einen Aufprall auf das Lenkrad stark verringert wird.

Das dritte Ausführungsbeispiel gemäß den Fig. 3A, 3B und 3C betrifft insbesondere eine pyrotechnisch verstellbare Lenksäule mittels eines "Schlittens", der sich bei einem Crash gegen einen Lastaufnehmer bewegt und damit Energie verzehrt.

Heutige, für einen Crash optimierte, Lenksäulen können, wie aus der Praxis bekannt ist, derart aufgebaut sein, dass sie an einem Schlitten befestigt sind, der sich bei einem Aufschlag einer Person auf das Lenkrad gegen eine Lastaufnahme bewegt. Diese Lastaufnahme ist beispielsweise ein verformbares oder sich verformendes und aufreißendes Blech, das einerseits mit dem Schlitten und andererseits der Lenkungsbefestigung an der Karosse verbunden ist. Bei einem Unfall erfolgt zusätzlich zum Airbag eine Bewegung des Lenkrades, was dabei Energie verzehrt. Dieser Abbau der Lastspitze ist besonders bei schwergewichtigen Personen als Ergänzung zum Airbag von Vorteil.

Kleine Fahrer sitzen gezwungenermaßen dicht vor dem Lenkrad. Bedingt durch den dadurch relativ geringen, für einige Unfallsituationen zu geringen Abstand zum Airbag kam es schon zu Todesfällen, obwohl die Personen angeschnallt waren (s. Begründung für den Gesetzentwurf der FMVSS208 USA, gültig ab 4.99).

Bei dem dritten Ausführungsbeispiel der vorliegenden Erfindung wird der Schlitten, der bei schwergewichtigen Personen Energie verzehrt, benutzt, um sich zeitlich vor oder während des Öffnens des Fahrerairbags nach vorne (d.h. in normaler Fahrtrichtung) zu bewegen. Hiermit wird der Abstand des Kopfes einer kleinen Person zum Airbag um die notwendige Entfernung vergrößert, die für ein verletzungsfreies Öffnen des Bags erforderlich ist.

Wird z.B. durch Erfassung mittels elektrischer Schalter am Fahrersitz festgestellt, dass der Fahrer sich im vorderen Bereich der Sitzstellung befindet, wird durch die Airbag-Crashelektronik zeitlich vor oder während der Öffnung des Airbags eine pyrotechnische Patrone gezündet, die im oder am Schlitten positioniert ist. Der von der Patrone erzeugte Gasdruck wird über einen Kanal auf Kolben geleitet, die zuerst die Befestigung eines Lastaufnahmeblechs entriegeln und dann den Schlitten mit der Lenksäule in Fahrtrichtung bewegen. Anhand praktischer Beispiele wurde ermittelt, dass sich somit der Abstand vom Airbag zum Kopf um ca. 70 mm vergrößert. Für leichtgewichtige, kleine Personen reicht der Airbag als Schutz aus. Es gibt keine kritische Lastspitze. Kritisch ist bei kleinen Personen der geringe Abstand des Airbags, der mit dieser dritten Ausführungsform gemäß den Fig. 3A, 3B und 3C ausreichend vergrößert wird.

Die Fig. 3A, 3B und 3C zeigen das dritte Ausführungsbeispiel der Erfindung mit einem beweglichen Schlitten 69 in einem Rahmen 70, der an der Karosserie (nicht gezeigt) längs verschiebbar gelagert ist. Unter Bezugnahme auf die Fig. 3A, 3B und 3C absorbiert ein verbieg- und aufreißbares "Lastblech" 71 bei großen Personen die Lastspitzen, wenn die Person auf das Lenkrad (nicht gezeigt) schlägt. Hierbei wird die pyrotechnische Patrone 72 nicht aktiviert. Gibt eine Überwachungselektronik (nicht gezeigt) das Signal, dass eine Person dicht vor dem Lenkrad sitzt, wird die pyrotechnische Patrone 72 gezündet. Durch einen Druckverteilungskanal 73 werden Kolben 74 und 75 an ihrer Stirnseite beaufschlagt. Diese Kolben 74 und 75 drücken zuerst auf ein Querblech 76, das mit - in diesem Beispiel - zwei Verriegelungsbolzen 77 und 78 für die Anbindung des Lastaufnahmebleches 71 verbunden ist. Diese Verriegelungsbolzen 77 und 78 werden aus den Löchern des Lastaufnahmebleches 71 gezogen. Der Schlitten 69 wird anschließend durch die Kolben 74 und 75, die sich am Befestigungsrahmen 70 abstützen, in Fahrtrichtung bewegt. Hierbei wird das Lastaufnahmeblech 71 nach oben weggebogen und gibt den Weg frei für die Schlittenbewegung. Damit wird der Airbag von dem Fahrer schlagartig auf größere Entfernung bewegt. Ähnliche Realisierungsmöglichkeiten mit gleicher oder ähnlicher Wirkung ergeben sich aus der Abbildungen der Fig. 3A, 3B und 3C zusammen mit fachmännischem Wissen.

Nachfolgend werden einige allgemeine Angaben zum dritten Ausführungsbeispiel dargestellt.

Grundsätzlich liegt dem dritten Ausführungsbeispiel die Idee zugrunde, dass eine Befestigung einer Lenksäule an einem Schlitten, der durch Aufschlag des Fahrers auf die Lenkung Lastspitzen durch Bewegung gegen ein energieaufnehmendes Blech aufnimmt, für kleine Personen, die dicht und verletzungsgefährdet nahe am Airbag sitzen, andersartig verwendet wird: Nachdem die Überwachungselektronik einen kleinen Menschen erkannt hat, wird mittels der erfindungsgemäßen Mechanik unter Verwendung von Pyrotechnik das Lastaufnahmeblech vom längsbeweglichen Schlitten entriegelt und der Schlitten mittels einer pyrotechnisch druckbeaufschlagten Kolbenanordnung in Fahrtrichtung bewegt. Hierdurch entsteht der Verletzungen vermeidende größere Abstand vom Kopf einer kleinen Person zum Airbag bei dessen Zündung.

Anders ausgedrückt wird gemäß dem dritten Ausführungsbeispiel in einer bevorzugten Ausgestaltung der vorliegenden Erfindung allgemein ein Lastspitzen aufnehmender Lenksäulenbefestigungsschlitten für schwergewichtige Personen bei kleinen, verletzungskritisch dicht vor dem Airbag sitzenden Personen derart pyrotechnisch verschoben, dass keine Verletzungen mehr durch Airbagzündungen entstehen können.

Der Druck vom Airbag kann dazu benutzt werden, mittels Kolben, wie in den früheren Beispielen gezeigt ist, die Komfortverstellung zu entriegeln.

Das Druckgas kann dabei auch z.B. mit einem Magnetventil derart gesteuert werden, dass es Durchgang zur Lenksäulenverstellung hat oder nicht. Ein solches Magnetventil sitzt vorzugsweise im Lenksäulenrohr zwischen Airbagdruckversorgung und Kolben.

Hintergrund für diese Maßnahme ist die Tatsache, dass es für schwergewichtige, große Personen, die richtig plaziert sind, von Vorteil ist, wenn die Lenkung in Normallage bleibt, um zusätzlich zum Airbag Energie absorbieren zu können. Bei kleinen, nahe am Lenkrad und Airbag sitzenden Personen ist es dagegen besser, mehr Abstand zum Airbag zu haben. Hier ist der Airbag allein als Energieaufnahme ausreichend.

Das Erkennen einer kleinen Person kann durch Ultraschall- oder Infrarotsensoren, Sitzbelegungserkennungsmatten oder Abfragen der Sitzeinstellung oder Sitzmemoryelektronik erfolgen. Am einfachsten und kostengünstigsten ist ein Schalter in der Sitzschiene, der die Position abfragt und bei vorderen Fahrersitzstellungen richtigerweise kleine Personen diagnostiziert. Wenn also eine kleine Person fährt, kann somit grundsätzlich das Magnetventil zum Gasdurchgang und damit zum Öffnen der Komfortverstellung auf Durchgang geschaltet sein.

Eine weitere Möglichkeit ist die Feststellung, üblicherweise mit einem Schalter im Gurtschloss, ob die (kleine) (evtl. auch große) Person angeschnallt ist oder nicht. Daraus lässt sich vor allem für eine kleine, nicht angeschnallte Person die Lenkradverstellung weg vom Kopf steuern.

Eine weitere Ergänzung zu den vorgenannten Ausführungsbeispielen ist die Verwendung eines "Freilaufes" zwischen Losdrehachse der Lenkungsverstellung und des Hebels, der bei einem Crash die Verstellung öffnet. Hierdurch bleibt das Crashentriegelungssystem bei Komfortverstellung in Ruhe.

Eine zusätzliche oder auch alternative Möglichkeit, die Lenksäule beim Crash auf mehr Abstand bei kleinen, evtl. nicht angeschnallten Personen zu bringen, ist mit dem sogenannten "Crashschlitten" machbar.

Moderne Sicherheitssäulen sind üblicherweise in einem schlittenartigen Gehäuse gelagert, das seinerseits wieder in einem Rahmen geführt wird, der mit der Karosserie verschraubt ist. Das schlittenartige Gehäuse ist mit dem Rahmen mittels eines Blechs verbunden (drittes Ausführungsbeispiel). Bei einem Crash wird dieses Blech Energie aufnehmend verformt, wenn ein großer, schwerer Insasse hohe Kräfte auf das Lenksystem gibt, wie bereits weiter oben erläutert wurde.

Weiter werden durch die einzelnen Varianten der Erfindung für kleine Personen, nicht angeschnallte Personen, "out of position" Personen und Kindersitze individuelle Maßnahmen getroffen zur Absenkung der Aggressivität des Fahrerairbags. Die Maßnahmen werden vor dem Crash und teilweise simultan getroffen. Gegenüber andersartigen "elektronischen" Lösungen sind die im Rahmen der Erfindung vorgeschlagene Grundsätze, Systeme und Ausführungen schneller und weitaus kostengünstiger. Ferner werden durch die Lenksäulenverstellung und insbesondere die anpassbare und steuerbare Lenksäulenverstellung die Probleme des "tödlichen" Airbags an der Wurzel gelöst.

Die Erfindung ist anhand der Ausführungsbeispiele in der Beschreibung und in den Zeichnungen lediglich exemplarisch dargestellt und nicht darauf beschränkt, sondern umfasst alle Variationen, Modifikationen und Substitutionen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele und deren Darstellungen in der Zeichnung entnehmen kann. Insbesondere sind alle einzelnen Merkmale und Ausgestaltungsmöglichkeiten der Erfindung und ihrer Ausführungsbeispiele kombinierbar.

## Patentansprüche

1. Sicherheitslenksäule (100), die in ihrer Axialrichtung mittels einer Komfortverstellung verstellbar ist,
wobei pyrotechnisch betriebene Lenksäulen-Rückzugseinrichtungen (102) vorgesehen sind, mittels denen eine Verstellung der Sicherheitslenksäule (100) in ihrer Axialrichtung bei einem Crash vom Insassen weg betreibbar ist, und
wobei die Lenksäulen-Rückzugseinrichtungen (102) einen pyrotechnischen Verstellzylinder enthalten, der an einer Führung derart beweglich gelagert ist, dass er in einer Ausgangsstellung mit der Komfortverstellung bewegt wird,
**dadurch gekennzeichnet,**
**dass** Einrichtungen zum Lösen einer Lenksäulenarretierung (33) der Komfortverstellung bei einem Crash vorgesehen sind, so dass eine Verstellung der Sicherheitslenksäule (100) in ihrer Axialrichtung bei einem Crash vom Insassen weg unter Einbeziehung der Komfortverstellung erfolgt, und
**dass** die Einrichtungen zum Lösen einer Lenksäulenarretierung (33) der Komfortverstellung eine elektrisch auslösbare oder zündbare pyrotechnische Patrone oder Kartusche (30) für eine Primärzündung (4) ortsfest außerhalb der drehbaren Lenksäule (1) enthalten.

2. Sicherheitslenksäule nach Anspruch 1, **dadurch gekennzeichnet, dass** sie derart mit einem pyrotechnisch angetriebenem Zylinder versehen ist, dass dieser mittels über Nokken eingesteuerter Zahnstange angreifend an einem Zahnrad die Verklemmachse der Komfortverstellung verdrehen kann, um damit die Lenksaulenarretierung (33) zu öffnen.

3. Sicherheitslenksäule nach Anspruch 1 oder 2, **dadurch gekennzeichnet, dass** sie derart mit einem pyrotechnisch angetriebenem Zylinder versehen ist, dass dieser mittels eines Schwenkhebels (10) eine Verklemmachse der Komfortverstellung verdrehen kann, um damit die Lenksaulenarretierung (33) zu öffnen.

4. Sicherheitslenksäule nach einem der vorhergehenden Ansprüche, **dadurch gekennzeichnet, dass** die Lenksäulen-Rückzugseinrichtungen (102) in Abhängigkeit von Fahrerdaten steuerbar, insbesondere ein- und ausschaltbar sind.

5. Sicherheitslenksäule nach einem der vorhergehenden Ansprüche, **dadurch gekennzeichnet, dass** ein pyrotechnischer Zylinder enthalten ist, der derart angebracht ist, dass er im unfallfreien Normalzustand bei Lenkungskomfortverstellung in einer Schlitzführung gleitet.

6. Sicherheitslenksäule nach einem der vorhergehenden Ansprüche, **dadurch gekennzeichnet, dass** die Komfortverstellung mit einer Verstellmechanik versehen ist, und dass eine als Zahnstange ausgeführte Kolbenstange der Verstellmechanik in jeder Komfortstellung nach zumindest etwa gleich kurzem Hub in ein Verstellzahnrad eingreift.

7. Sicherheitslenksäule nach einem der vorhergehenden Ansprüche, **dadurch gekennzeichnet, dass** ein pyrotechnischer Verstellzylinder enthalten ist, der in seiner Schlitzführung derart gelagert ist, dass bei Auslösung der Lenksäulen-Rückzugseinrichtungen (102) eine Verkeilung von zwei durch Abscherstifte verbundene Keilen derart verklemmt, dass ein Keil durch Mitnahme des Zylinders gegen den anderen verkeilt wird und damit der Zylinder fixiert ist.

8. Sicherheitslenksäule nach einem der vorhergehenden Ansprüche, **dadurch gekennzeichnet, dass** ein pyrotechnischer Zylinder vorgesehen ist, der derart in einer Schlitzführung gelagert ist, dass sich zwei keilförmige Mitnehmer gegeneinander verkeilen, indem ein Keil durch den Zylinder in einer Richtung bewegt wird und der andere mittels abreißbarem Mitnehmer in der Gegenrichtung mit der Kolbenstange des Zylinders bewegt wird.

9. Sicherheitslenksäule nach einem der vorhergehenden Ansprüche, **dadurch gekennzeichnet, dass** ein pyrotechnischer Zylinder vorgesehen ist, der derart gestaltet ist, so dass damit außer der Öffnung einer Verstellmechanik der Sicherheitslenksäule (102) danach ein Schlitten (69) zur Befestigung der Sicherheitslenksäule (102) vom Fahrer weg bewegbar ist.

10. Sicherheitslenksäule nach einem der vorhergehenden Ansprüche, **dadurch gekennzeichnet, dass** ein pyrotechnischer Zylinder vorgesehen ist, der derart geführt ist, dass er in einer Komfortverstellschlittenführung über den Komfortweg hinaus bewegt wird.

11. Sicherheitslenksäule nach einem der vorhergehenden Ansprüche, **dadurch gekennzeichnet, dass** ein pyrotechnischer Zylinder vorgesehen ist, der derart geführt ist, dass der Zylinder am Ende seines Hubes verrastet.

12. Sicherheitslenksäule nach einem der vorhergehenden Ansprüche, **dadurch gekennzeichnet, dass** ein pyrotechnischer Zylinder vorgesehen ist, der mit einem Klemmkolben versehen ist, so dass sich der Klemmkolben nur vorwärts beweglich ist und bei Last in Gegenrichtung klemmt.

13. Sicherheitslenksäule nach einem der vorhergehenden Ansprüche, **dadurch gekennzeichnet, dass** der pyrotechnische Zylinder einen Kolben enthält, der mittels klemmender Kugeln verklemmbar ist.

14. Sicherheitslenksäule nach einem der vorhergehenden Ansprüche, **dadurch gekennzeichnet, dass** ein pyrotechnischer Zylinder vorgesehen ist, wobei auf der der Kraftseite gegenüberliegender Seite des Zylinders eine Dämpfung, insbesondere eine Hydraulik- oder Luftdämpfung derart angebracht ist, dass mit der Abströmung der Medien eine Geschwindigkeitsregulierung bewirkbar ist.

15. Sicherheitslenksäule nach einem der vorhergehenden Ansprüche, **dadurch gekennzeichnet, dass** ein pyrotechnischer Zylinder vorgesehen ist, der derart zündbar ist, dass eine Abstimmung mit der Zündung eines Airbags (18) erfolgt.

16. Sicherheitslenksäule nach einem der vorhergehenden Ansprüche, **dadurch gekennzeichnet, dass** ein Lenksäulenbefestigungsschlitten (69) und eine solche Lastblechgestaltung vorgesehen sind, dass das Lastblech (71) nach dessen Entriegelung vom Schlitten (69) weg gebogen wird und die Längsbewegung des Schlittens (69) freigibt.

17. Sicherheitslenksäule nach einem der vorhergehenden Ansprüche, **dadurch gekennzeichnet, dass** der Lenksäulenbefestigungsschlitten (69) elektronisch gesteuert bei großen Personen mit dem Lastabsorbierungsblech (71) Lastspitzen aufnimmt, und gleichzeitig verwendet wird, um pyrotechnisch insbesondere elektronisch gesteuert die Sicherheitslenksäule (102) auf größere Distanz zu kleinen, nahe am Bag (18) sitzenden Personen zu bringen.

18. Sicherheitssystem, **gekennzeichnet durch** eine Sicherheitslenksäule nach einem der vorhergehenden Ansprüche.

19. Sicherheitssystem nach Anspruch 18, **dadurch gekennzeichnet, dass** die Sicherheitslenksäule (100) über ein Lastabsorbierungsblech (71) derart an einem Schlitten (69) befestigt ist, dass die Befestigung des Lastabsorbierungsblechs (71) bei einem Crash trennbar ist.

20. Sicherheitssystem nach Anspruch 18 oder 19, **dadurch gekennzeichnet, dass** pyrotechnische Betriebsmittel einer Airbagvorrichtung vorgesehen sind, die in den pyrotechnisch betriebenen Lenksäulen-Rückzugseinrichtungen (102) enthalten oder damit gekoppelt sind.

21. Sicherheitssystem nach einem der Ansprüche 18 bis 20, **dadurch gekennzeichnet, dass** Betriebseinrichtungen für einen Airbag (18) und insbesondere einem mehrstufig auslösbaren Airbag (18) vorgesehen sind, mit denen die Lenksäulen-Rückzugseinrichtungen (102) antriebsmäßig gekoppelt sind, so dass dieselben pyrotechnischen Betriebsmittel, die zum Aufblasen des Airbags (18) vorhanden sind, zumindest auch teilweise zur Verstellfreigabe und/oder zum Verstellantrieb der Lenksäulen-Rückzugseinrichtungen (102) einsetzbar sind.

22. Sicherheitssystem nach Anspruch 20 oder 21, **dadurch gekennzeichnet, dass** das Aufblasen und Entfalten des Airbags (18), und insbesondere ggf. das mehrstufige Aufblasen und Entfalten des Airbags (18) in Abhängigkeit vom Rückzugsweg und/oder der Rückzugsposition der Lenksäule (1) steuerbar ist oder umgekehrt.

23. Sicherheitssystem nach einem der Ansprüche 18 bis 22, **dadurch gekennzeichnet, dass** ein Aufblasen und Entfalten des Airbags (18), insbesondere ggf. das mehrstufige Aufblasen und Entfalten des Airbags (18), und/oder ein Zurückziehen der Lenksäule (1) in Abhängigkeit von Insassendaten steuerbar sind/ist.

24. Sicherheitssystem nach einem der Ansprüche 18 bis 23, **dadurch gekennzeichnet, dass** eine vorzugsweise mechanische Steuerung vorgesehen ist, die Folgeauslösungen der pyrotechnischen Betriebseinrichtungen für die Lenksäulen-Rückzugseinrichtungen (102) und/oder den Airbag (18) insbesondere mechanisch in Abhängigkeit vom Rückzugsweg und/oder der Rückzugsposition der Lenksäule (1) und/oder vom Aufblas-/Entfaltungszustand des Airbags (18) bewirkt.

25. Fahrzeug, **gekennzeichnet durch** eine Sicherheitslenksäule oder ein Sicherheitssystem nach einem der Ansprüche 1 bis 24.

26. Sicherheitsverfahren zum Auslösen und Betätigen einer Sicherheitslenksäule oder eines Sicherheitssystems nach einem der Ansprüche 1 bis 24, **dadurch gekennzeichnet, dass** zunächst über eine Zündung einer einzigen oder ersten Treibladung eine Arretierung oder Hemmung der Sicherheitslenksäule (100) in deren Axialrichtung gelöst bzw. aufgehoben wird, und dass dann die Sicherheitslenksäule (100) durch die Wirkung der der einzigen oder ersten Treibladung oder einer weiteren ggf. zweiten Treibladung in Richtung auf ihre maximal zurückgezogene Position vom Fahrer weg beaufschlagt wird.

27. Sicherheitsverfahren nach Anspruch 26, **dadurch gekennzeichnet, dass** die weitere Treibladung eine zweite Treibladung ist, die durch die Wirkung der gezündeten ersten Treibladung gezündet wird.

28. Sicherheitsverfahren nach Anspruch 26 oder 27, **dadurch gekennzeichnet, dass** die weitere Treibladung eine zweite Treibladung ist, mittels der nach ihrer Zündung gleichzeitig mit oder zeitversetzt zu dem Lenksäulenrückzug ein Airbag (18) aufgeblasen wird.

29. Sicherheitsverfahren in einem Kraftfahrzeug nach einem der Ansprüche 26 bis 28, **dadurch gekennzeichnet, dass** vor einer unfallbedingten Lenksäulenbewegung vom Fahrer weg die Sitzposition des Fahrers erfasst wird, und dann in Abhängigkeit von der Sitzposition, wenn letztere einen vorgegebenen oder vorgebbaren Abstand vom Lenkrad unterschreitet, und oder anderer Insassendaten vor oder während einer Airbagauslösung durch gesonderte Betätigungseinrichtungen, wie z.B. pyrotechnische Kraftspeicher, die Lenksäule vom Fahrer weg bewegt wird.

## Claims

1. Safety steering column (100) which can be displaced in its axial direction by means of a comfort adjusting arrangement,
wherein pyrotechnically operated steering column retracting devices (102) are provided by means of which a displacement of the safety steering column (100) in its axial direction and away from the occupant in the event of a collision can be driven, and
wherein the steering column retracting devices (102) contain a pyrotechnic displacement cylinder which is moveably mounted on a guide in such a way that in an initial position it is moved with the comfort adjusting arrangement,
**characterised in that**
devices for releasing a steering column locking arrangement (33) of the comfort adjusting arrangement in the event of a collision are provided so that a displacement of the safety steering column (100) in its axial direction and away from the occupant along with the comfort adjusting arrangement is effected in the event of a collision, and
that the devices for releasing a steering column locking arrangement (33) of the comfort adjusting arrangement contain an electrically triggerable or ignitable pyrotechnic cartridge (30) for a primary ignition (4) in a fixed position outside the rotatable steering column (1).

2. Safety steering column as claimed in claim 1, **characterised in that** it is provided with a pyrotechnically driven cylinder in such a way that by means of a toothed rod, which is controlled by cams, in engagement with a toothed wheel this cylinder can rotate the clamping axle of the comfort adjusting arrangement in order thereby to undo the steering column locking arrangement (33).

3. Safety steering column as claimed in claim 1 or 2, **characterised in that** it is provided with a pyrotechnically driven cylinder in such a way that by means of a pivot lever (10) this cylinder can rotate a clamping axle of the comfort adjusting arrangement in order thereby to undo the steering column locking arrangement (33).

4. Safety steering column as claimed in any one of the preceding claims, **characterised in that** the steering column retracting devices (102) can be controlled, in particular turned on and off, in dependence upon driver data.

5. Safety steering column as claimed in any one of the preceding claims, **characterised in that** it contains a pyrotechnic cylinder which is mounted in such a way that in the normal state, i.e. not during an accident, during steering comfort adjustment it slides in a slot guide.

6. Safety steering column as claimed in any one of the preceding claims, **characterised in that** the comfort adjusting arrangement is provided with an adjusting mechanism and that a piston rod, formed as a toothed rod, of the adjusting mechanism engages with an adjusting toothed wheel in each comfort position after at least approximately the same short stroke.

7. Safety steering column as claimed in any one of the preceding claims, **characterised in that** it contains a pyrotechnic adjusting cylinder which is mounted in its slot guide in such a way that upon triggering of the steering column retracting devices (102) a wedging arrangement of two wedges connected by shear-off pins is clamped in such a way that by entrainment of the cylinder one wedge is wedged against the other and the cylinder is therefore fixed.

8. Safety steering column as claimed in any one of the preceding claims, **characterised in that** a pyrotechnic cylinder is provided which is mounted in a slot guide in such a way that two wedge-shaped carriers wedge against each other, wherein one wedge is moved by the cylinder in one direction and the other is moved by means of an carrier, which can be torn off, in the opposite direction with the piston rod of the cylinder.

9. Safety steering column as claimed in any one of the preceding claims, **characterised in that** a pyrotechnic cylinder is provided which is formed in such a way that, apart from the opening of an adjusting mechanism of the safety steering column (102), a carriage (69) for attachment of the safety steering column (102) can thereby subsequently be moved away from the driver.

10. Safety steering column as claimed in any one of the preceding claims, **characterised in that** a pyrotechnic cylinder is provided which is guided in such a way that it is moved in a comfort adjusting carriage guide beyond the comfort path.

11. Safety steering column as claimed in any one of the preceding claims, **characterised in that** a pyrotechnic cylinder is provided which is guided in such a way that the cylinder latches at the end of its stroke.

12. Safety steering column as claimed in any one of the preceding claims, **characterised in that** a pyrotechnic cylinder is provided which is provided with a clamping piston so that the clamping piston can only move forwards and, under load, is clamped in the opposite direction.

13. Safety steering column as claimed in any one of the preceding claims, **characterised in that** the pyrotechnic cylinder contains a piston which can be clamped by means of clamping balls.

14. Safety steering column as claimed in any one of the preceding claims, **characterised in that** a pyrotechnic cylinder is provided, wherein on the side of the cylinder opposite the force side a damping arrangement, in particular a hydraulic or pneumatic damping arrangement, is mounted in such a way that speed regulation can be effected with the outflow of the media.

15. Safety steering column as claimed in any one of the preceding claims, **characterised in that** a pyrotechnic cylinder is provided which can be ignited in such a way that there is coordination with the triggering of an airbag (18).

16. Safety steering column as claimed in any one of the preceding claims, **characterised in that** a steering column attachment carriage (69) and such a load plate formation are provided that the load plate (71) is bent away once it is unlocked from the carriage (69) and permits longitudinal movement of the carriage (69).

17. Safety steering column as claimed in any one of the preceding claims, **characterised in that** in an electronically controlled manner and in the case of larger persons the steering column attachment carriage (69) receives load peaks with the load absorbing plate (71) and is at the same time used to bring the safety steering column (102) over a larger distance towards smaller persons sitting close to the airbag (18), in a pyrotechnically, in particular electronically, controlled manner.

18. Safety system **characterised by** a safety steering column as claimed in any one of the preceding claims.

19. Safety system as claimed in claim 18, **characterised in that** the safety steering column (100) is attached by a load-absorbing plate (71) to a carriage (69) in such a way that the attachment of the load-absorbing plate (71) can be severed in the event of a collision.

20. Safety system as claimed in claim 18 or 19, **characterised in that** pyrotechnic operating means for an airbag device are provided which are contained in the pyrotechnically operated steering column retracting devices (102) or are coupled thereto.

21. Safety system as claimed in any one of claims 18 to 20, **characterised in that** operating devices for an airbag (18) and in particular an airbag (18) which is triggerable in a plurality of stages are provided, with which the steering column retracting devices (102) are drivingly coupled so that the same pyrotechnic operating means which are provided to inflate the airbag (18) can also be used at least partially to allow the displacement and/or to drive the displacement of the steering column retracting devices (102).

22. Safety system as claimed in claim 20 or 21, **characterised in that** the inflation and unfolding of the airbag (18), and in particular possibly the multi-stage inflation and unfolding of the airbag (18), can be controlled in dependence upon the retraction path and/or the retraction position of the steering column (1) or vice versa.

23. Safety system as claimed in any one of claims 18 to 22, **characterised in that** inflation and unfolding of the airbag (18), in particular possibly the multi-stage inflation and unfolding of the airbag (18), and/or retraction of the steering column (1) are/is controllable in dependence upon occupant data.

24. Safety system as claimed in any one of claims 18 to 23, **characterised in that** a preferred mechanical control is provided which effects successive triggering of the pyrotechnic operating devices for the steering column retracting devices (102) and/or the airbag (18) in particular in a mechanical manner in dependence upon the retraction path and/or the retraction position of the steering column (1) and/or upon the inflation/unfolding condition of the airbag (18).

25. Vehicle, **characterised by** a safety steering column or a safety system as claimed in any one of claims 1 to 24.

26. Safety method for triggering and actuating a safety steering column or a safety system as claimed in any one of claims 1 to 24, **characterised in that** firstly ignition of a single or first propelling charge releases or cancels locking or limiting of the safety steering column (100) in its axial direction, and that then the safety steering column (100) is then acted upon by the effect of the single or first propelling charge or of a further possible second propelling charge in the direction of its maximum retracted position away from the driver.

27. Safety method as claimed in claim 26, **characterised in that** the further propelling charge is a second propelling charge which is ignited by the effect of the ignited first propelling charge.

28. Safety method as claimed in claim 26 or 27, **characterised in that** the further propelling charge is a second propelling charge by means of which, after ignition, an airbag (18) is inflated simultaneously or in a time-offset manner with respect to the steering column retraction.

29. Safety method in a motor vehicle as claimed in any one of claims 26 to 28, **characterised in that** prior to accident-induced steering column movement away from the driver the seating position of the driver is detected and then, in dependence upon the seating position, if this position falls within a preset or presettable distance from the steering wheel, and/or other occupant data, the steering column is moved away from the driver prior to or during airbag triggering by separate actuating devices such as, e.g. a pyrotechnic force accumulator.

## Revendications

1. Colonne de direction de sécurité (100), réglable dans sa direction axiale au moyen d'un réglage de confort,
dans laquelle sont prévus des moyens de rétraction de colonne (102) à fonctionnement pyrotechnique, au moyen desquels un déplacement de la colonne de direction (100) dans sa direction axiale en éloignement de l'occupant lors d'une collision peut être effectué, et
dans laquelle les moyens de rétraction de colonne (100) contiennent un cylindre de déplacement pyrotechnique, lequel est monté sur un guidage avec possibilité de déplacement, de telle sorte qu'il est déplacé avec le réglage de confort dans une position de départ,
**caractérisée en ce que**
il est prévu des moyens pour libérer un arrêt de colonne (33) du réglage de confort lors d'une collision, de sorte que lors d'une collision un déplacement de la colonne de direction (100) a lieu dans sa direction axiale en éloignement de l'occupant en mettant en oeuvre le réglage de confort, et
**en ce que** les moyens pour libérer un arrêt de colonne (33) du réglage de confort contiennent une cartouche pyrotechnique (30) à déclenchement ou allumage électrique pour un allumage primaire (4), disposée de manière stationnaire à l'extérieur de la colonne de direction rotative (1).

2. Colonne de direction de sécurité selon la revendication 1, **caractérisée en ce qu'**elle est pourvue d'un cylindre à fonctionnement pyrotechnique, de telle façon que celui-ci peut faire tourner l'axe de coincement du réglage de confort au moyen d'une crémaillère, pilotée par des cames, qui attaque une roue dentée, afin d'ouvrir ainsi l'arrêt de colonne (33).

3. Colonne de direction de sécurité selon la revendication 1 ou 2, **caractérisée en ce qu'**elle est pourvue d'un cylindre à fonctionnement pyrotechnique, de telle façon que celui-ci peut faire tourner un axe de coincement du réglage de confort au moyen d'un levier pivotant (10), afin d'ouvrir ainsi l'arrêt de colonne (33).

4. Colonne de direction de sécurité selon l'une des revendications précédentes, **caractérisée en ce que** les moyens de rétraction de colonne (102) peuvent être commandés, en particulier enclenchés et déclenchés, en fonction de données relatives au conducteur.

5. Colonne de direction de sécurité selon l'une des revendications précédentes, **caractérisée en ce qu'**elle contient un cylindre pyrotechnique qui est monté de telle façon que, dans l'état normal sans accident avec réglage de confort de la colonne de direction, il coulisse dans un guidage à fente.

6. Colonne de direction de sécurité selon l'une des revendications précédentes, **caractérisée en ce que** le réglage de confort est pourvu d'un mécanisme de réglage, et **en ce qu'**une tige de piston, réalisée sous la forme d'une crémaillère, du mécanisme de réglage, engrène dans chaque position de confort et après une brève course, au moins approximativement égale, avec une roue dentée de réglage.

7. Colonne de direction de sécurité selon l'une des revendications précédentes, **caractérisée en ce qu'**elle contient un cylindre de déplacement pyrotechnique qui est monté dans son guidage à fente de telle façon que, lors d'un déclenchement des moyens de rétraction de colonne (102), un mécanisme à coin formé par deux coins reliés par des tiges de cisaillement se coince de telle façon qu'un coin se coince contre l'autre en entraînant le cylindre et que le cylindre est ainsi fixé.

8. Colonne de direction de sécurité selon l'une des revendications précédentes, **caractérisée en ce qu'**il est prévu un cylindre pyrotechnique qui est monté dans un guidage à fente de telle façon que deux éléments d'entraînement en forme de coin se coincent l'un contre l'autre, **en ce qu'**un coin est déplacé par le cylindre dans une direction et l'autre est déplacé, au moyen d'un élément d'entraînement arrachable, dans la direction opposée avec la tige de piston du cylindre.

9. Colonne de direction de sécurité selon l'une des revendications précédentes, **caractérisée en ce qu'**il est prévu un cylindre pyrotechnique, conçu de telle manière qu'avec celui-ci, outre l'ouverture d'un mécanisme de déplacement de la colonne de direction (102), un chariot (69) pour la fixation de la colonne de direction (102) est ensuite déplaçable en éloignement du conducteur.

10. Colonne de direction de sécurité selon l'une des revendications précédentes, **caractérisée en ce qu'**il est prévu un cylindre pyrotechnique, qui est guidé de telle façon qu'il est déplacé dans un guidage du chariot de réglage de confort au-delà de la course de confort.

11. Colonne de direction de sécurité selon l'une des revendications précédentes, **caractérisée en ce qu'**il est prévu un cylindre pyrotechnique, qui est guidé de telle façon que le cylindre est enclenché à la fin de sa course.

12. Colonne de direction de sécurité selon l'une des revendications précédentes, **caractérisée en ce qu'**il est prévu un cylindre pyrotechnique qui est pourvu d'un piston de coincement, de sorte que le piston de coincement n'est déplaçable que vers l'avant et se coince sous charge dans la direction opposée.

13. Colonne de direction de sécurité selon l'une des revendications précédentes, **caractérisée en ce que** le cylindre pyrotechnique contient un piston qui peut être coincé à l'aide de billes de coincement.

14. Colonne de direction de sécurité selon l'une des revendications précédentes, **caractérisée en ce qu'**il est prévu un cylindre pyrotechnique, de telle façon qu'un amortissement, en particulier un amortissement hydraulique ou un amortissement pneumatique, est monté sur le côté du cylindre à l'opposé du côté recevant la force, de telle façon qu'il est possible de réaliser une régulation de vitesse grâce à l'écoulement des fluides.

15. Colonne de direction de sécurité selon l'une des revendications précédentes, **caractérisée en ce qu'**il est prévu un cylindre pyrotechnique, celui-ci pouvant être allumé de telle manière qu'il se produit un accord avec l'allumage d'un airbag (18).

16. Colonne de direction de sécurité selon l'une des revendications précédentes, **caractérisée en ce qu'**il est prévu un chariot de fixation de colonne (69), et **en ce que** la conformation de la tôle encaissant les charges est telle que ladite tôle (71) est cintrée en éloignement du chariot (69) après son déverrouillage, et libère le mouvement longitudinal du chariot (69).

17. Colonne de direction de sécurité selon l'une des revendications précédentes, **caractérisée en ce que** le chariot de fixation de colonne (69) encaisse, sous commande électronique, des pointes de charge dans le cas de personnes de grande taille avec la tôle d'encaissement de charges (71), et **en ce que** le chariot est simultanément utilisé pour amener, de manière pyrotechnique et en particulier sous commande électronique, la colonne de direction de sécurité (102) à une plus grande distance par rapport à des personnes de petite taille, assises de façon proche de l'airbag (18).

18. Système de sécurité, **caractérisé par** une colonne de direction de sécurité selon l'une des revendications précédentes.

19. Système de sécurité selon la revendication 18, **caractérisé en ce que** la colonne de direction de sécurité (100) est fixée sur un chariot (69) au moyen d'une tôle d'encaissement de charges (71) de telle manière que, lors d'une collision, la fixation de la tôle d'encaissement de charges (71) est séparable.

20. Système de sécurité selon la revendication 18 ou 19, **caractérisé en ce qu'**il est prévu des moyens de fonctionnement pyrotechniques pour un dispositif à airbag, qui sont contenus dans les moyens de rétraction de colonne (102) à fonctionnement pyrotechnique, ou qui sont couplés à ceux-ci.

21. Système de sécurité selon l'une des revendications 18 à 20, **caractérisé en ce qu'**il est prévu des moyens de fonctionnement pour un airbag (18), et en particulier un airbag (18) déclenchable en plusieurs stades, avec lesquels les moyens de rétraction de colonne (102) sont couplés en termes d'entraînement, de sorte que les mêmes moyens de fonctionnement pyrotechniques, qui sont prévus pour le gonflage de l'airbag (18), sont utilisables au moins aussi partiellement pour la libération de déplacement et/ou pour l'entraînement de déplacement des moyens de rétraction de colonne (102).

22. Système de sécurité selon la revendication 20 ou 21, **caractérisé en ce que** le gonflage et le déploiement de l'airbag (18), et en particulier le cas échéant le gonflage et le déploiement en plusieurs stades de l'airbag (18), sont commandés en fonction du trajet de rétraction et/ou de la position de rétraction de la colonne de direction (1), ou inversement.

23. Système de sécurité selon l'une des revendications 18 à 22, **caractérisé en ce qu'**un gonflage et un déploiement de l'airbag (18), en particulier le cas échéant le gonflage et le déploiement en plusieurs stades de l'airbag (18), et/ou une rétraction de la colonne de direction (1) est/sont commandable(s) en fonction de données relatives aux occupants.

24. Système de sécurité selon l'une des revendications 18 à 23, **caractérisée en ce qu'**il est prévu une commande, de préférence mécanique, qui provoque les déclenchements en séquence des moyens de fonctionnement pyrotechniques pour les moyens de rétraction de colonne (102) et/ou pour l'airbag (18), en particulier par voie mécanique en fonction du trajet de rétraction et/ou de la position de rétraction de la colonne de direction (1) et/ou de l'état de gonflage/déploiement de l'airbag (18).

25. Véhicule, **caractérisé par** une colonne de direction de sécurité ou un système de sécurité selon l'une des revendications 1 à 24.

26. Procédé de sécurité pour déclencher et actionner une colonne de direction de sécurité ou un système de sécurité selon l'une des revendications 1 à 24, **caractérisé en ce que** l'on déclenche tout d'abord ou l'on annule, via un allumage d'une unique ou d'une première charge propulsive, un arrêt ou un coincement de la colonne de direction de sécurité (100) dans sa direction axiale, et **en ce que** la colonne de direction de sécurité (100) est alors sollicitée en direction de sa position de rétraction maximale en éloignement du conducteur sous l'effet de l'unique ou de la première charge propulsive, ou d'une autre éventuelle seconde charge propulsive.

27. Procédé de sécurité selon la revendication 26, **caractérisé en ce que** l'autre charge propulsive est une seconde charge propulsive, qui est allumée sous l'effet de la première charge propulsive allumée.

28. Procédé de sécurité selon la revendication 26 ou 27, **caractérisé en ce que** l'autre charge propulsive est une seconde charge propulsive, au moyen de laquelle, après son allumage, un airbag (18) est gonflé, simultanément ou en décalage temporel à la rétraction de la colonne de direction.

29. Procédé de sécurité dans un véhicule automobile selon l'une des revendications 26 à 28, **caractérisé en ce que**, avant un déplacement de la colonne de direction dû à un accident en éloignement du conducteur, la position assise du conducteur est détectée et ensuite, en fonction de la position assise, lorsque que cette dernière passe au-dessous d'une distance prédéterminée ou prédéterminable par rapport au volant de direction, et/ou en fonction d'autres données relatives aux occupants, la colonne de direction est déplacée en éloignement du conducteur avant ou pendant un déclenchement de l'airbag, par des moyens d'actionnement spéciaux, comme par exemple un accumulateur de force pyrotechnique.
